# EUROPEAN PATENT APPLICATION

(11) **EP 1 098 258 A1**
(43) Date of publication of application: **09.05.2001**
(21) Application number: 99308748.5
(22) Date of filing: 03.11.1999
(51) Int. Cl.: G06F 17/30

(54) **Information access**

(71) Applicant: BRITISH TELECOMMUNICATIONS public limited company, London EC1A 7AJ (GB)
(72) Inventor: The designation of the inventor has not yet been filed
(74) Representative: Dutton, Erica L. G.

(57) **Abstract**

An apparatus and method are provided for accessing sets of information stored in an information system. A user submits search criteria to an information retrieval tool (120) via a user interface (132). From those sets of information referenced in a corresponding response by the information retrieval tool (120), the user may indicate at the user interface (132) that one or more are relevant. The identity of each relevant set of information is noted by a monitor (135) and recorded in a store (140) together with a history of search criteria used on this and subsequent occasions to retrieve the relevant set of information. For each set of information identified in the store (140), a weighting is calculated for each corresponding search criterion, the weighting being indicative of the proportion of users who, on using the search criterion with the retrieval tool (120), identified the set of information and found it relevant. Documents identified in the store (140) may be grouped by information category and those search criteria having a weighting in excess of a predetermined threshold in respect of each document in the group are identified for use in subsequent searches in that information category.

## Description

This invention relates to information access and in particular to the use of information retrieval experience of users to enable identification of effective search criteria.

The task of finding relevant information in a large and unstructured information repository, be it at the global or corporate level, is addressed by many known information retrieval tools, search engines for example. A search engine may be dedicated to helping users to identify potentially relevant information within a single file store, or it may offer a general information searching service involving access to a great many individual file stores accessible over a communication network such as the Internet. In arrangements such as the Internet, as a result of the wide distribution and huge diversity of information stored, known information retrieval tools offer varying degrees of success in identifying documents that a user is likely to find relevant, particularly in view of what the user hoped to find on the basis of submitted search criteria. Typically, a retrieval tool identifies a large number of potentially relevant documents and attempts to rank them using a predetermined ranking algorithm. However, those documents eventually found to be most relevant to a user may not in practice appear towards the top of the apparently ranked list, assuming that the retrieval tool has even identified the most relevant examples.

The Internet is an example of a globally accessible distributed file storage and retrieval system, being a multimedia computer communications network built on world-wide telephone and data networks. Over 100,000 servers of various types are presently connected to the Internet providing a publicly accessible distributed data store. Data may be stored on a server in a form accessible using a standard Internet communication protocol called the "HyperText Transfer Protocol" (HTTP). A server storing and making data available in this form is known as an "HTTP server" or a "web server". Data files stored on web servers and accessible by means of HTTP are known as "web pages" which together form the "World Wide Web", or simply the "WEB". Web pages are written using a special WEB language called HyperText Markup Language (HTML) that includes a facility to create links to other pages on the WEB, as appropriate, and enables a user to navigate through information on the WEB by means of such links. Information held on the WEB is accessible to anyone having a computer connected to the Internet and with an interest in accessing it.

An HTTP Uniform Resource Locator (URL) has been adopted as a WEB standard to provide a consistent international naming convention to uniquely identify the location of any WEB resource, including for instance documents, programs, sound and video clips. The HTTP enables URL-identified files (web pages) to be located and transferred for reproduction at user equipment connected to the Internet. Underlying transport protocols, primarily TCP/IP, enable connections to be established, between an Internet user and a WEB server for example, for the intercommunication of data.

Internet users may access information on the WEB using proprietary WEB browser products running on personal computers (PCs) or workstations linked to the Internet. WEB browsers communicate with WEB resources using standard Internet protocols such as HTTP to download selected web pages. WEB browsers interpret HTML commands that were embedded in web pages at the time of markup by web page authors and, if appropriate, display those pages graphically.

A more recent type of information retrieval tool finding application over the Internet is known to make use of the information retrieval experiences of users to improve the ranking of identified information. In one known technique, retrieval behaviour of users is monitored, analysed and recorded in order to identify those documents that, in practice, appear to be most relevant to those users. A relevant document may be identified through observing that a user thought it worthy of more detailed investigation (having read a supplied abstract, for example) and followed up a reference, or by noting the length of time spent by a user in accessing the document. An appropriate weighting may be applied to each retrieved document, those documents receiving most user attention being awarded a higher weighting than those that are generally ignored. In the event that one of these documents is subsequently retrieved by a user as a result of a search query, a reference to the document's recorded retrieval history enables such a weighting to be used to boost or diminish an initial assessment of the document's relevance by the search engine, improving the quality of the relevance ranking.

However, techniques such as that described above are limited to working with the set of documents actually retrieved. If the quality of information retrieved is poor, then post-retrieval analysis of that information is unlikely to be able to compensate, particularly when key information was simply not identified in the search.

According to a first aspect of the present invention there is provided an apparatus for use in accessing sets of information stored in an information system, the apparatus having:
a user interface providing access to at least one information retrieval tool;
a store for recording data relating to information retrieval by users;
monitoring means operable, on receipt from a user at said user interface of one or more search criteria for submission to said at least one information retrieval tool, to detect an indication by said user that a set of information identified by said at least one information retrieval tool using said search criteria, is relevant, and to record said one or more search criteria and a reference to said relevant set of information in said store;
weighting means arranged to calculate, in respect of a set of information referenced in said store, a weighting for each search criterion recorded against said referenced set of information, said weighting being indicative of the proportion of users who, upon using the recorded search criterion with said at least one information retrieval tool, identified said referenced set of information as being relevant; and
analysis means to identify a recorded search criterion having, for each member of a group comprising one or more sets of information referenced in said store, a weighting in excess of a predetermined threshold.

Embodiments of the present invention enable a user to exploit the previous information searching and retrieval experience of users to identify and to share those search criteria that have proved most effective in retrieving relevant information in particular information categories, using the available information retrieval tools. By identifying and making use of the most effective search criteria, there is an increased probability that a corresponding search response will contain more relevant information. It is often the case that poor quality search results arise, in part, from a sub-optimal selection of search criteria, keywords for example, by the user.

The present invention may be applied to information access arrangements in a variety of different information systems, be they contained on a single server or accessible over a communications network. In particular, embodiments of the present invention may be applied to information access over the Internet, at the global level, or over Intranets at the corporate or organisational level. The invention may be used for example by a closed community of users, but in respect of information stored anywhere on the WEB or some other distributed arrangement, or in any arrangement where users' information retrieval activity can be monitored or captured to a sufficient extent.

Preferably, in a first embodiment, the monitoring means are arranged to detect an indication comprising a request by said user to access a set of information identified by said at least one information retrieval tool. It is assumed in this embodiment that a decision by a user to investigate a particular set of information is indicative that the set of information is likely to be relevant to what the user hoped to find using the submitted search criteria. Many information retrieval tools provide not just a list of references to potentially relevant information sets, but also a short text summary of each information set, where appropriate, on which a user may base a decision to investigate further. However, the monitoring means may be responsive to other types of feedback by a user that may indicate that a particular set of information identified using the search criteria is of some relevance. For example, the user interface may enable a user to directly indicate the relevance of one or more documents listed in a response by the information retrieval tool, the monitoring means being responsive to such user input.

Preferably, in said first embodiment, the analysis means include grouping means to identify one or more information categories represented by sets of information referenced in said store and to associate one or more of said referenced sets of information representative of the same information category, and wherein said analysis means are arranged to identify those recorded search criteria having, for each of said associated sets of information, a weighting in excess of said predetermined threshold.

According to a second embodiment, the analysis means are arranged to identify a recorded search criterion having, for each member of a first group comprising one or more sets of information selected by a user from those sets referenced in said store, a weighting in excess of said predetermined threshold. In this way, a user may select one or more documents from the store as being representative of an interesting category of information, and may trigger the analysis means to identify the most effective search criteria for retrieving documents in that information category. The user may then use the identified search criteria in subsequent information searches.

Preferably, in said second embodiment, the analysis means are further arranged to receive a search criterion from said user interface, to identify a second group comprising one or more sets of information referenced in said store for which said received search criterion has a weighting in excess of said predetermined threshold, and to identify one or more further recorded search criteria having, in respect of each member of said second group, a weighting in excess of said predetermined threshold. In this way, the user may begin with a search criterion and, on that basis, trigger the analysis means to identify other related search criterion that may be used to search for information sets in a similar information category.

According to a second aspect of the present invention, there is provided a method of accessing sets of information stored in an information system, comprising the steps of:
(i) detecting submission by a user of a search criterion to an information retrieval tool, and a corresponding response from the retrieval tool;
(ii) detecting an indication by the user as to the relevance of a set of information identified in the response from the retrieval tool;
(iii) storing a reference to the set of information indicated as being relevant at step (ii), and a record of the search criterion submitted by the user at step (i);
(iv) selecting one or more sets of information referenced in the store and calculating, for each search criterion recorded in respect of each of said one or more selected sets of information, a weighting indicative of the proportion of users who, on submitting the search criterion to the information retrieval tool, identified the selected set of information and indicated that it was relevant; and
(v) identifying, in respect of said one or more selected sets of information from step (iv), a recorded search criterion having, in respect of each said selected set of information, a weighting in excess of a predetermined threshold.

Preferably, at step (iv), each said selected set of information is representative of the same category of information, and wherein the method includes the step:
(vi) using said identified search criterion from step (v) to search for further information in said category of information.

There now follows, by way of example only, a description of specific embodiments of the present invention. This description is to be read in conjunction with the accompanying drawings, of which:
Figure 1 is a diagram showing an information access apparatus in use according to preferred embodiments of the present invention;
Figure 2 is a flow chart showing the steps in operation of an information retrieval monitor according to a first embodiment of the present invention;
Figure 3 is a flow diagram showing the steps in operation of a query term analyser according to a first embodiment of the present invention;
Figure 4 is a flow diagram showing a variation in the operation of an information retrieval monitor according to a third embodiment of the present invention.

### Overview

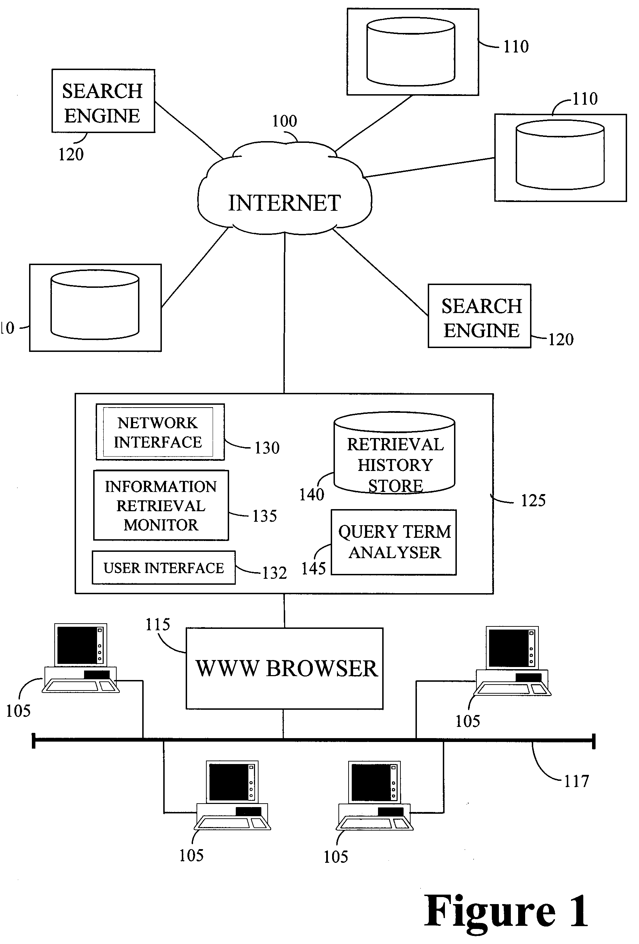

Referring to Figure 1, a diagram is presented showing preferred embodiments of the present invention being applied to information retrieval over the Internet 100. Users are provided with terminals 105, for example personal computers (PCs) or workstations, having installed thereon or arranged with access to a conventional WEB browser 115. As shown in Figure 1, the browser 115 may comprise a conventional WEB browser product installed on a local server to which the user terminals 105 are connected by means of a local area network (LAN) 117. The browser 115 is linked to one or more servers 125 by any appropriate communications link. The server 125 is provided in particular with a network interface 130 to enable users to gain access to the Internet 100 and thus to gain access to information stored on web servers 110, also connected to the Internet 100. The server 125 is also provided with a user interface 132 through which all user information access is channelled. In particular, the user interface 132 enables users to access known search engines 120 in order to carry out information searches over the Internet 100. In addition, the otherwise conventional server 125 includes, in embodiments of the present invention, the following features: an information retrieval monitor 135 for monitoring information retrieval activity of users via the user interface 132; a store 140 for recording a retrieval history for particular information sets retrieved by users; and a query term analyser 145 to identify, from the recorded historical retrieval data (140), the most effective search query terms in particular information categories and to make these terms available to users for use in subsequent information searches. The operation of these additional features, in particular, will be described below in more detail according to preferred embodiments of the present invention. In this description, "query term" is to be interpreted broadly, to include any type of search criteria acceptable to search engines 120 or to other information retrieval tools. Such criteria may include not only words or word phrases, but also date and time information and any other measures of information relevance. Similarly, in this description, the term "document" is to be interpreted broadly and may be used to refer to any set of multimedia information, for example text, image data, video, sound and electronic mail message.

### Information Retrieval Monitor 135

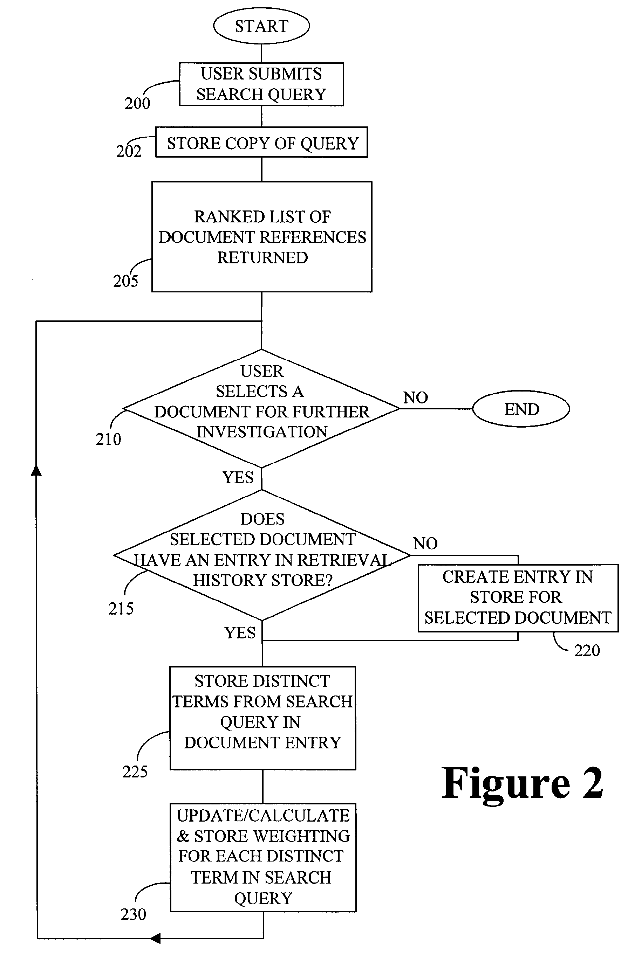

Operation of the information retrieval monitor 135 will now be described with reference to Figure 2, according to a first embodiment of the invention. Preferably, the information retrieval monitor 135 is arranged to monitor the information search and retrieval activity of users taking place via the user interface 132. The user interface 132 provides access to one or more search engines 120 or other information retrieval tools available via the network interface 130. The information retrieval monitor 135 is arranged with access to the user interface 132 and the network interface 130 to monitor all user information search requests submitted via the user interface 132, together with any corresponding responses returned via the network interface 130. Preferably, operation of the information retrieval monitor 135 is triggered in the first instance by the user interface 132 upon selection of a search engine 120 by a user.

Referring to Figure 2, at STEP 200, a user submits a search query to a selected search engine 120 from the browser 115, having gained access to that search engine 120 via the user interface 132. At STEP 202, the monitor 135 stores a copy of the submitted search query. At STEP 205, a response to the search query is returned by the search engine 120 via the network interface 130 and the user interface 132. The response may typically comprise a ranked list of document references, Uniform Resource Locators (URL) in the case of a WEB search engine, with each reference being accompanied by a short abstract of the document. From these short abstracts a user may be able to determine whether any of the referenced documents appear to be sufficiently relevant to warrant further investigation and, if so, to make an access request from the browser 115 using the appropriate URL, via the user interface 132, to retrieve such a potentially relevant document.

At STEP 210, if the user selects a document from the ranked list and requests access to the document, then at STEP 215 the information retrieval monitor 135 notes the request and determines whether or not the selected document has a retrieval history entry in the store 140. If not, then at STEP 220, an entry is created in the store 140 for the selected document. Having created an entry at STEP 220, or if such an entry already existed at STEP 215, then at STEP 225, the monitor 135 adds the word or word phrases used in the search query, stored at STEP 202, to the respective document entry in the store 140. Preferably, some analysis is performed on the search query at STEP 225 before storing it in the retrieval history of a document. For example, if the search query comprises words or word phrases then the search query is separated into its constituent terms and certain words are reduced to a stemmed form for storage and weighting. Preferably, only a single copy of each distinct query term is stored in each respective document entry, together with either a count of the number of times the term was used in a successful retrieval of the respective document by a user (i.e. the document was investigated by the user), or a weighting as discussed below. Thus, at STEP 230, the counter or weighting stored for each distinct term in the document entry is updated to take account of the latest search query.

Having updated the document entry at STEP 230, processing returns to STEP 210 to monitor any further selection by users of documents for investigation. If, at STEP 210, no document was selected, or if no further document is selected within a predetermined timeout period for example, then processing by the information retrieval monitor 135 with respect to the submitted search query ends.

Preferably, operation of the information retrieval monitor 135 may be enhanced in a number of ways within the first embodiment. For example, at STEP 210, the monitor 135 may be adapted to be responsive to other types of user feedback made via the user interface 132, indicative of the perceived relevance of the selected document to the user. In particular, a facility may be included in the user interface 132 to enable a user to provide direct feedback to the monitor 135 as to the relevance of some or all of the documents identified by a search query. With such a feature, the monitor 135 is able to precisely select only those documents of known relevance to users for inclusion in the retrieval history store 140. As a further enhancement, the user interface 132 may enable users to indicate the relevance of documents identified by a search query using a finer measure of relevance on a discrete or continuous scale of measurement. The monitor may take such detailed feedback into account in assigning weightings to terms recorded in respect of particular documents. Alternatively, or in addition, the monitor 135 may note the time spent by a user in accessing a particular document, increasing the weighting applied to a corresponding query term according to the total time spent by users in reviewing the document.

The steps in operation of the information retrieval monitor 135, described above with reference to Figure 2, may be triggered each time a user initiates a search for information via the user interface 132, ensuring that an up-to-date information retrieval history of users is maintained in the store 140.

### Query Term Analyser 145

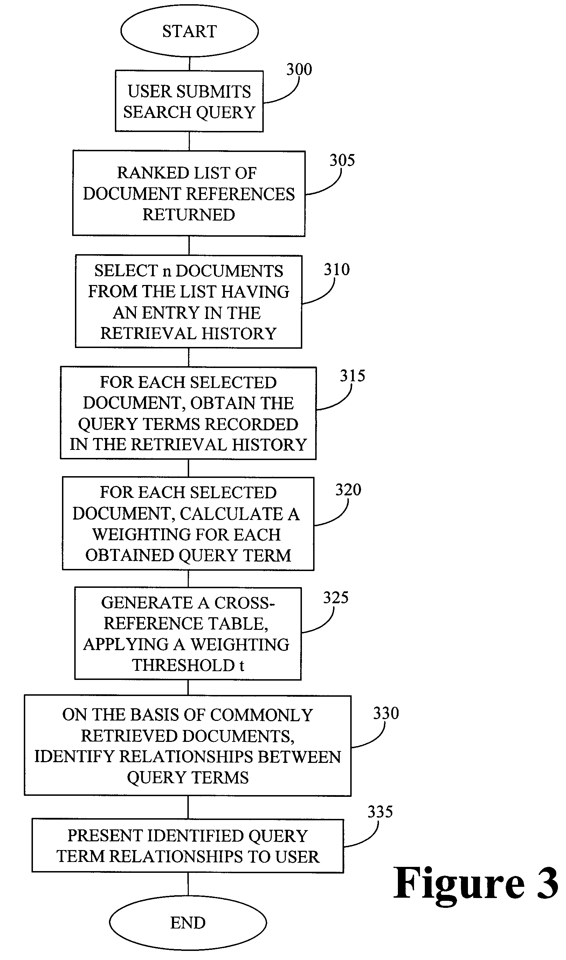

The steps in operation of the query term analyser 145, according to the first embodiment of the present invention, will now be described with reference to Figure 3 and will be demonstrated with a worked example. Preferably, the query term analyser 145 is triggerable by the information retrieval monitor 135 following update of the retrieval history store 140 to take account of the results of an information search by a user. However, as will be discussed later in relation to a second embodiment, the query term analyser 145 may be triggered at any other time by a user, via the user interface 132, to provide information derived from the contents of the retrieval history store 140.

Referring to Figure 3, at STEP 300, a user selects a search engine 120 by means of the user interface 132 and submits a search query. For this worked example, we will assume that the user enters the search query "DATA AND INFORMATION MANAGEMENT". At STEP 305, a response to the search query is received at the network interface 130 from the search engine 120, and conveyed to the user via the user interface 132 and the browser 115. The response typically comprises an ordered list of document references, ranked by the search engine 120, each document reference being accompanied by a short abstract of the respective document. In a preferred embodiment, steps 300 and 305 operate under the control of the information retrieval monitor 135.

At STEP 310, the query term analyser 145 selects a predetermined number, n, of documents from the list of referenced documents contained in the response from the search engine 120. Preferably the n highest ranked (by the search engine 120) documents having an entry in the information retrieval history store 140 are selected. In the worked example, we will assume that the following ten documents are selected from the list returned by the search engine 120 in response to the search query "DATA AND INFORMATION MANAGEMENT", each document having an existing entry in the retrieval history store 140:
A: Information Agents for the WEB
B: Jasper: Communicating Information Agents
C: Data Mining for Marketing
D: ALADIN - Applied Logic for Advanced Data Mining
E: Communities of Interest
F: Data Management Research
G: Autonomous Management of Distributed Information Systems
H: Data Mining Research
I: Networked Information Management
J: ProSearch: A Profile-based Search Engine

At STEP 315, for each of the selected documents, the query term analyser 145 accesses the retrieval history store 140 to identify from the respective document entry all the terms recorded as having been used to retrieve the document. In the worked example, we will assume that the retrieval history (140) reveals that the above documents were investigated by users who retrieved them using search queries containing the following words and phrases:

| Phrase / Word | Abbreviation |
|---|---|
| Data Management | (DM) |
| | |

| | |
|---|---|
| Information Management | (IM) |
| Knowledge Management | (KM) |
| Distributed Systems | |
| Data Mining | |
| Autonomous Systems | |
| Logic | |
| Marketing | |

At STEP 320, if a weighting has not already been calculated at STEP 230 of Figure 2 and stored with each distinct term, the query term analyser 145 calculates a weighting using one of a number of possible weighting algorithms. In particular, if STEP 230 served merely to update a counter recording the number of users to have used the distinct term to retrieve a particular document, then at STEP 320 the query term analyser 145 may use such a counter in the calculation of a weighting for the term. In a preferred weighting algorithm, each distinct term may be assigned a weight in the range 0 to 1, the weight in respect of a particular document being calculated as the proportion of users that upon using the term in their search queries, investigated the content of the document thereby retrieved. Such a weighting expresses the probability that users who retrieved a document by using the term in their queries, found the document to be relevant. This weighting may also be interpreted as indicating the degree to which the term represents the meaning of the document's content.

A term's weight may be further adjusted according to the amount of time that those users spent looking at the document, up to a predetermined timeout period, as monitored through the user interface 132 by the information retrieval monitor 135. Weightings may, for example, be increased in proportion to the total time users spent looking at the document.

At STEP 325, the query term analyser 145 constructs a table showing cross-references between each distinct query term and each of the n selected documents from the latest search query response. The table contains the weighting calculated at STEP 320 (or STEP 230) for each term in respect of each selected document. In the worked example, the following cross-reference table of term weights is generated, with documents being represented by rows and terms by columns:

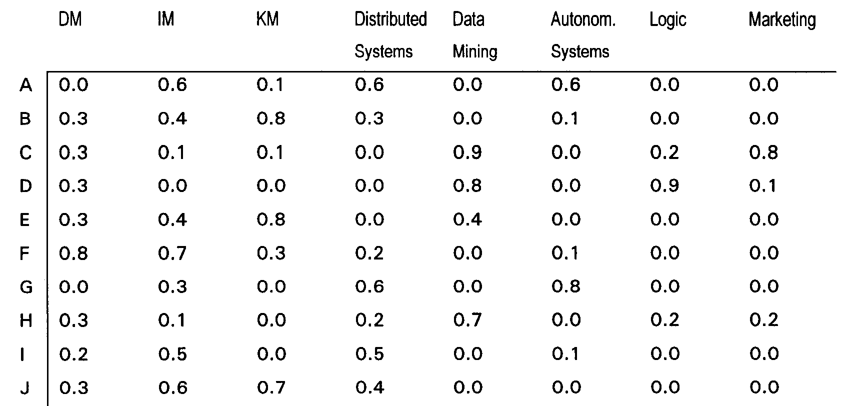

Preferably, at STEP 325, the query term analyser 145 applies a predetermined weighting threshold t to the table entries to convert each of the weightings into a binary indicator according to whether or not it exceeds the threshold t. In this way, a cross-reference between a term and a document is recognised as existing only if the term's weighting exceeds the threshold t in respect of that document. That is if the probability that a user using the term in a search query would find the cross-referenced document is greater than the threshold t, then the term is cross-referenced with the document. To illustrate this in the worked example, a threshold of t=0.2 is selected, resulting in the following table of cross-references, those weightings exceeding the threshold being replaced by an "X". The user's latest search query "DATA AND INFORMATION MANAGEMENT", abbreviated as "DIM", is added as the first column in the table, each of the ten selected documents having been retrieved in response to that search query.

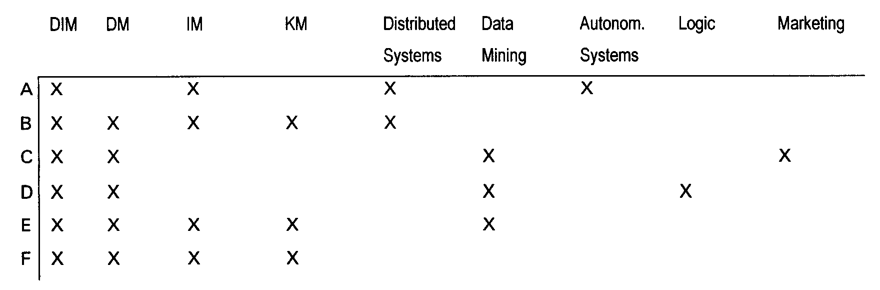

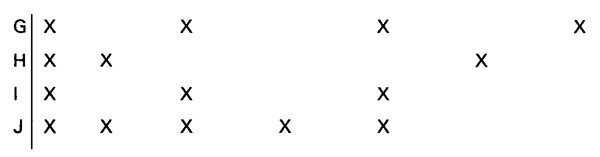

In the above cross-reference table, each "X" indicates that the term was found by users to have been particularly successful in retrieving the cross-referenced document.

Having established a cross-reference table at STEP 325, the query term analyser 145, at STEP 330, derives information to highlight any relationships that may be found to exist between the particular query terms entered by the user and other terms recorded in the retrieval history store 140 that may be relevant to the category of information sought by the user. Such derived relationships may be presented to the user initiating the search query, via the user interface 132.

One of a number of different analysis techniques may be used by the query term analyser 145 at STEP 330 to identify related query terms and to present those relationships in a conveniently useable way. In a preferred technique, the cross-reference table may be analysed to identify groups of terms that have been successful in retrieving a particular document or set of documents. The document or set of documents may be chosen to represent a particular category of information. A known algorithm, described in the book "Formale Begriffsanalyse mit C++" by Frank Vogt, ISBN 3-540-61071-5, published by Springer, may be used to automatically analyse the cross-reference table to identify groups of one or more documents relating to the same category of information and to identify all the corresponding terms that were most effective in retrieving each identified group of documents (information category). Those terms identified as being most effective in respect of a particular category of information may be considered to be related, and useable in various permutations by the user to improve the effectiveness of subsequent information retrieval in that information category. In the worked example, the following relationships of document sets and term groups may be identified from the table above using the algorithm referenced above:
({A, B, C, D, E, F, G, H, I, J}, {DIM})
({I, F, E, B, J, A, G}, {DIM, IM})
({F, H, B, J, E, C, D}, {DIM, DM})
({F, B, J, E}, {DIM, DM, IM, KM})
({I, A, G, B, J}, {DIM, IM, Distributed S.})
({B, J}, {DIM, IM, KM, Distributed S.})
({A, G}, {DIM, IM, Distributed S., Autonomous S.})
({H, E, C, D}, {DIM, DM, Data Mining})
({C}, {DIM, DM, Data Mining, Marketing})
({D}, {DIM, DM, Data Mining, Logic})
({E}, {DIM, DM, IM, KM, Data Mining})

In each of the above document-term relationships, the first set is the set of documents representing the scope of a particular information category. The second set is the set of the most effective query terms shared by all the documents in the first set. On the basis of the recorded historical data (140), terms in the second set may be considered to be related to each other with respect to the information category represented by the corresponding document set.

Having identified, at STEP 330, the relationships among query terms that include the query term originally entered by the user, the query term analyser 145, at STEP 335, then supplies this information to the user interface 132 in a form suitable for presentation to the user. A number of possible presentation formats may be used for this, including a simple presentation of the list of document-term relationships such as that shown above from the worked example. Preferably, the algorithm referenced above may be used to carry the analysis one step further and to present the relationships between terms in a so-called "concept lattice" format that may be presented to users at the user interface 132. In the worked example, the concept lattice representing the identified relationships, starting from the user's original query, is as follows:

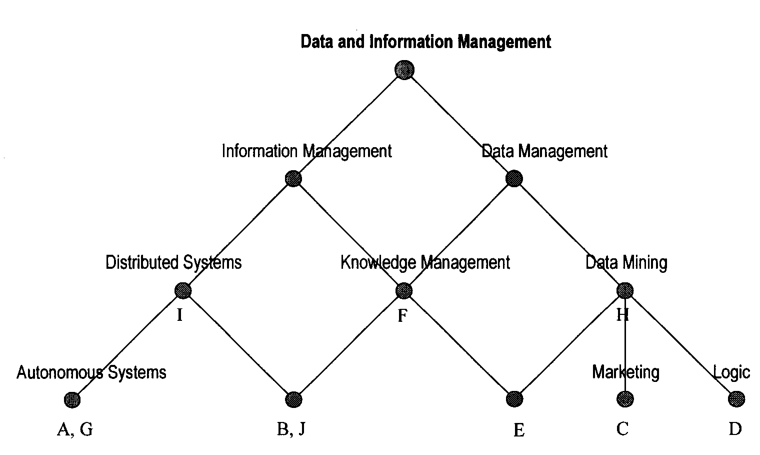

### Second Embodiment

The steps in operation of the query term analyser 145 of a first embodiment, described above with reference to Figure 3, were triggered following a user's information search, launched by means of the user interface 132, with relevant information being captured by the information retrieval monitor 135 and used to update the retrieval history store 140. However, in a second embodiment of the present invention, the contents of the information retrieval history store 140 may be exploited at any time at the request of a user via the user interface 132, without the user launching an information search beforehand.

The user interface 132 may provide two further options whereby a user may trigger operation of the query term analyser 145 and provide useful information. Firstly, the user interface 132 may prompt the user to enter a particular term and to trigger the query term analyser 145 to identify other terms relating to a similar information category. Secondly, the user interface 132 may enable a user to select one or more documents relating to an information category of interest to the user, each selected document having an entry in the information retrieval history store 140. On the basis of the selected documents, the query term analyser 145 may identify related query terms that have been successful in retrieving documents in the same information category.

With regard to the first option, in the context of the worked example described above, a user may enter the term "Autonomous Systems" at the user interface 132 with the intention of finding other search query terms that might help to improve the rate of retrieval of relevant documents by a search engine 120. From the cross-reference table above, the query term analyser 145 has identified the following document-term relationship involving the term "Autonomous Systems":
({A, G}, {DIM, IM, Distributed Systems, Autonomous Systems})

From this relationship it can be seen that the documents A and G retrieved by the term "Autonomous Systems" were also retrieved by the terms "Data and Information Management", "Information Management" and "Distributed Systems". The query term analyser 145 may therefore return these terms for display at the user interface 132 in a response to the user's request.

With regard to the second option, the user interface 132 may provide a facility for a user to view the different groupings of documents referenced in the information retrieval history store 140, and to select a document group representative of a particular category of information in which the user wishes to launch information search queries. The different groups of documents may be those identified by the query term analyser 145 using the algorithm referenced above. In the worked example, the identified document groups are those sets of documents contained in each of the document-term relationships derived above. On the basis of the user's selected document group, the user may trigger the query term analyser 145 to execute process STEPs 310 to 335 of Figure 3, with the user's selected documents being inserted at STEP 310 in place of those n documents that would otherwise have been selected from a search engine response. The resultant output of the query term analyser 145, suggesting related query terms that have proved particularly successful in retrieving the selected group of documents in earlier information searches, may then be used by the user in subsequent information searches.

### Third Embodiment

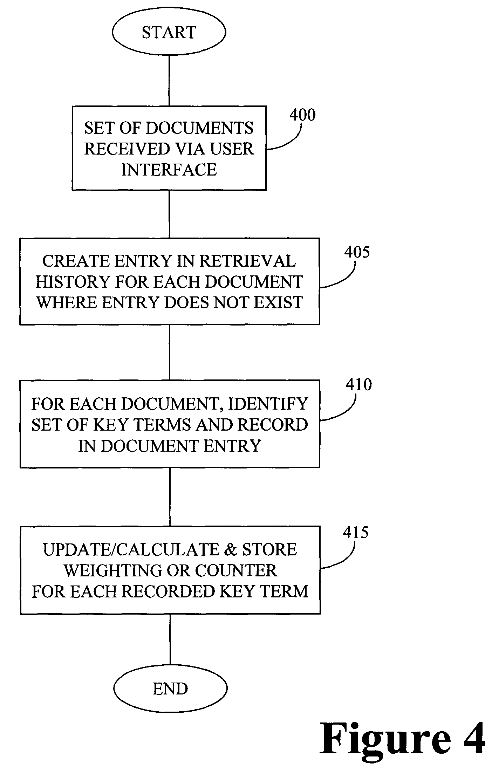

A third embodiment of the present invention will now be described with reference to Figure 4, incorporating a further variation in the operation of the information retrieval monitor 135. This variation provides a useful way to begin using the apparatus when little if any retrieval history has been recorded in the store 140. The variation enables a set of documents or document references to be submitted and processed by the information retrieval monitor 135 to identify so called "key terms", indicative of the overall information content of the documents. These key terms may then be recorded in entries created in the retrieval history store for each respective document as an alternative to query terms submitted by users. Preferably, a key term extraction technique may be used such as that described in the Applicant's co-pending international patent application, number PCT/GB98/03468. Preferably, once a satisfactory quantity of data has been recorded in the retrieval history store 140 by this technique, operation of the information retrieval monitor 135 may proceed according to the method described above with reference to Figure 2.

Referring to Figure 4, processing begins at STEP 400 with receipt at the user interface 132 of a set of one or more documents or document references, preferably considered by a user to be useful and relevant to one or more particular information categories. The set of documents may be simply a list of the highest ranked document references returned by a search engine in response to an initial search query submitted by a user. At STEP 405, for each document identified in the received list, an entry is created in the retrieval history store 140 if no entry for the document already exists. At STEP 410, each document identified in the received list is analysed to identify key terms representative of the information content of the document. Preferably, the key term identification technique referenced above may be used in which, in a particular embodiment, a set of one or more word groups is first identified from the document, each word group in the set comprising one or more words that occur more than once in the document, and from the set are removed those word groups that are sub-strings of longer word groups in the set, the remaining word groups being key terms of the document. Then, at STEP 415, a counter or weighting is calculated or updated and recorded for each key term, in the same way as that described above for the operation of STEP 230 of Figure 2.

### Implementation

Among many possible implementations of an apparatus that would be apparent to a skilled person, arranged to operate according to those embodiments of the present invention described above, a preferred implementation will now be described in which the server 125 is chosen to be a conventional web server as supplied for example by Apache™, Netscape™ or Microsoft™. The user interface 132 may be implemented as a Common Gateway Interface (CGI) program installed on the web server 125. The user interface CGI program provides access to a web page having facilities to enable all user data entry and information retrieval activity to take place as described above according to the first, second and third embodiments of the present invention. A Universal Resource Locator (URL) may be assigned to the web page provided by the user interface 132 so that any user may gain access to the user interface 132 from a WEB browser by specifying the assigned URL in a HyperText Transfer Protocol (HTTP) request message. In this way, any user having access to the Internet 100 may gain access to the user interface 132 using a conventional WEB browser without need for a more direct connection to the web server 125 as suggested in Figure 1.

The web page provided by the user interface 132 may include a data entry box to enable a user to enter a search query (STEP 200 of Figure 2 and STEP 300 of Figure 3), and a "Submit" button for triggering the CGI program to generate an HTTP request message specifying the URL of a predetermined or user-selected search engine 120, including the submitted search query as a parameter in an appropriate format, and to send the HTTP message via the (Internet) network interface 130 to the search engine 120.

Preferably, the information retrieval monitor 135 may be implemented as a module within the CGI program implementing the user interface 132. Upon receipt of a response from the search engine 120 at the network interface 130, the information retrieval monitor 135 may control presentation of the content of the response to the user at the web page of the user interface 132 (STEP 205 and STEP 305) and thereafter mediate in any user requests to access specific documents listed in the search engine response. Specifically, if the user selects a document from the response list and requests access to it (STEP 210), the information retrieval monitor CGI program may trap the document access request message generated at the user interface 132. Having noted the details of the original submitted search query, the identity of the selected document and the document URL, the information retrieval monitor CGI program then generates an appropriate HTTP message and sends it to the user's WEB browser, instructing the browser to redirect the document access request message to the document URL. Further steps in operation of the information retrieval monitor 135 as described above with reference to Figure 2 and Figure 4, may be implemented within the CGI program operating in conjunction with conventional file storage facilities provided by the web server 125 or accessible remotely.

Preferably, the query term analyser may be implemented as a computer program written using the C programming language and installed to run on the web server 125. Operation of the query term analyser program (steps 310 to 330 of Figure 3) may be triggered by the user interface CGI program in response to appropriate user data entry at the user interface web page.

## Claims

1. An apparatus for use in accessing sets of information stored in an information system, the apparatus having:
a user interface providing access to at least one information retrieval tool;
a store for recording data relating to information retrieval by users;
monitoring means operable, on receipt from a user at said user interface of one or more search criteria for submission to said at least one information retrieval tool, to detect an indication by said user that a set of information identified by said at least one information retrieval tool using said search criteria, is relevant, and to record said one or more search criteria and a reference to said relevant set of information in said store;
weighting means arranged to calculate, in respect of a set of information referenced in said store, a weighting for each search criterion recorded against said referenced set of information, said weighting being indicative of the proportion of users who, upon using the recorded search criterion with said at least one information retrieval tool, identified said referenced set of information as being relevant; and
analysis means to identify a recorded search criterion having, for each member of a group comprising one or more sets of information referenced in said store, a weighting in excess of a predetermined threshold.

2. An apparatus according to Claim 1, wherein said monitoring means are arranged to detect an indication comprising a request by said user to access a set of information identified by said at least one information retrieval tool.

3. An apparatus according to Claim 1 or Claim 2, wherein said analysis means are arranged to identify a recorded search criterion having, for each member of a first group comprising one or more sets of information selected by a user from those sets referenced in said store, a weighting in excess of said predetermined threshold.

4. An apparatus according to any one of claims 1 to 3, wherein said analysis means are further arranged to receive a search criterion from said user interface, to identify a second group comprising one or more sets of information referenced in said store for which said received search criterion has a weighting in excess of said predetermined threshold, and to identify one or more further recorded search criteria having, in respect of each member of said second group, a weighting in excess of said predetermined threshold.

5. An apparatus according to any one of the preceding claims, wherein said search criteria include words or word phrases and wherein said monitoring means are operable to record words from said one or more search criteria in a stemmed form.

6. An apparatus according to any one of the preceding claims, wherein said analysis means include grouping means to identify one or more information categories represented by sets of information referenced in said store, to associate one or more of said referenced sets of information representative of the same information category, and wherein said analysis means are arranged to identify those recorded search criteria having, for each of said associated sets of information, a weighting in excess of said predetermined threshold.

7. A method of accessing sets of information stored in an information system, comprising the steps of:
(i) detecting submission by a user of a search criterion to an information retrieval tool, and a corresponding response from the retrieval tool;
(ii) detecting an indication by the user as to the relevance of a set of information identified in the response from the retrieval tool;
(iii) storing a reference to the set of information indicated as being relevant at step (ii), and a record of the search criterion submitted by the user at step (i);
(iv) selecting one or more sets of information referenced in the store and calculating, for each search criterion recorded in respect of each of said one or more selected sets of information, a weighting indicative of the proportion of users who, on submitting the search criterion to the information retrieval tool, identified the selected set of information and indicated that it was relevant; and
(v) identifying, in respect of said one or more selected sets of information from step (iv), a recorded search criterion having, in respect of each said selected set of information, a weighting in excess of a predetermined threshold.

8. A method according to Claim 7, wherein, at step (iv), each said selected set of information is representative of the same category of information, and wherein the method includes the step:
(vi) using said identified search criterion from step (v) to search for further sets of information in said category of information.

9. A method according to Claim 7 or Claim 8, wherein, at step (ii), said indication comprises accessing a set of information identified in the response from the retrieval tool.

10. A method according to Claim 9, wherein, at step (ii), detecting said indication includes measuring the time spent by the user in accessing said set of information.

11. A method according to Claim 10, wherein, at step (iv), said weighting is adjusted according to the measurements of time spent by users in accessing the respective selected set of information.
